# EUROPÄISCHE PATENTSCHRIFT

(11) **EP 3 370 461 B1**
(45) Veröffentlichungstag und Bekanntmachung des Hinweises auf die Patenterteilung: **17.06.2020**
(21) Anmeldenummer: 18153812.5
(22) Anmeldetag: 29.01.2018
(51) Int. Cl.: H04W 52/02

(54) **VORRICHTUNG, VERFAHREN UND COMPUTERPROGRAMM FÜR EIN MOBILGERÄT**
DEVICE, METHOD AND COMPUTER PROGRAM FOR MOBILE DEVICE
DISPOSITIF, PROCÉDÉ ET PROGRAMME INFORMATIQUE POUR UN APPAREIL MOBILE

(30) Priorität: 01.03.2017 DE 102017203358
(43) Veröffentlichungstag der Anmeldung: 05.09.2018
(73) Patentinhaber: VOLKSWAGEN AKTIENGESELLSCHAFT, 38440 Wolfsburg (DE)
(72) Erfinder: Jurthe, Sascha, 45529 Hattingen (DE)

(56) Entgegenhaltungen:
- US-A1- 2010 273 486
- US-A1- 2016 337 960
- US-A1- 2016 370 843

## Beschreibung

Ausführungsbeispiele beziehen sich auf eine Vorrichtung, auf ein Verfahren und ein Computerprogramm für ein Mobilgerät, genauer, aber nicht ausschließlich, um eine Vorrichtung zum Steuern einer Nutzung eines ersten Mobilkommunikationssystems oder eines zweiten Mobilkommunikationssystem für eine Datenübertragung.

Die Übertragung von großen Datenmengen auf Mobilgeräte oder von Mobilgeräten stellt Benutzer und Entwickler häufig vor ein Dilemma. Einerseits können zelluläre Mobilfunksysteme, wie etwa Long Term Evolution (LTE) oder Universal Mobile Telecommunication System (UMTS) genutzt werden, um die Datenübertragung an vielen Orten durchzuführen. Andererseits sind diese zellulären Mobilfunksysteme häufig so konzipiert, dass sich viele Nutzer eine begrenzte Zahl von Kommunikationsressourcen teilen, was eine Übertragungskapazität solcher Mobilfunksysteme für einzelne Nutzer reduzieren kann. Ferner werden häufig hohe Kosten für die Übertragung großer Datenmengen über solche Mobilfunksysteme fällig. Alternativ können etwa lokale drahtlose Netzwerke genutzt werden (auch engl. Wireless Local Access Networks, WLAN), deren Verfügbarkeit jedoch lokal begrenzt sein kann.

US-Patentanmeldung 2010 / 0 273 486 A1 zeigt ein Mobilgerät, das ausgebildet ist, in einem ersten Mobilkommunikationssystem (etwa einer Basisstation) und in einem zweiten Mobilkommunikationssystem (etwa einem Kabellosen Zugangspunkt, auch engl. Wireless Access Point) zu kommunizieren und für die jeweilige Kommunikation eine verbleibende Batterielaufzeit zu bestimmen. Der Benutzer des Geräts kann basierend auf dieser Voraussage bestimmen, welches der Mobilkommunikationssysteme zur Kommunikation genutzt werden soll. Die Anmeldung offenbart jedoch nicht, einen voraussichtlich nächsten Zeitpunkt zum Nachfüllen des Energievorrats zu bestimmen und Datenübertragungen basierend auf dem voraussichtlich nächsten Ladezeitpunkt durchzuführen.

Die Deutsche Patentanmeldung DE 10 2010 030 224 A1 offenbart ein Verfahren und eine Vorrichtung zur Datenübertragung zwischen einer Kommunikationseinheit und einem Fahrzeug, etwa über einen Mobilfunkverbindung oder einen kabellosen Zugangspunkt. Bei diesem Datenaustausch kann etwa ein Energie-Status einer Kommunikationsschnittstelle, etwa eines Mobilgeräts berücksichtigt werden, um einen Datenaustausch zu planen. Die Anmeldung zeigt jedoch nicht, Datenübertragungen basierend auf einem voraussichtlich nächsten Ladezeitpunkt der Kommunikationsschnittstelle oder des Fahrzeugs durchzuführen.

Die Deutsche Patentanmeldung DE 10 2015 204 373 A1 offenbart ein Verfahren zum Betranken von Kraftfahrzeugen mit einem flüssigen Betriebsstoff. Dabei wird zusätzlich zum flüssigen Betriebsstoff eine drahtlose Kommunikation zwischen dem Fahrzeug und der Ladesäule hergestellt.

US-Patentanmeldung 2012/0 106 672 A1 offenbart ein Verfahren und einen Lade-Adapter zum Bereitstellen von Energiediensten über ein Netz mit Netzverbindungspunkten (etwa Ladestationen für Elektrofahrzeuge). Die Anmeldung eines Elektrofahrzeugs an der Ladestation wird über ein drahtloses Netzwerk durchgeführt, über das sichergestellt wird, dass ein Konto des Halters des Elektrofahrzeugs als Kompensation für die abgeführte Energie belastet werden kann.

US-Patentanmeldung 2016 / 0337960 A1 zeigt ein Verfahren zum Steuern einer Netzwerkauswahl eines Mobilgeräts in einem zellulären Mobilkommunikationssystem. Dabei kann etwa eines Bewegungsgeschwindigkeit oder ein Batterieladezustand des Mobilgeräts genutzt werden, um zu bestimmen, ob das Mobilgerät über ein erstes oder über ein zweites Netz kommuniziert.

US-Patentanmeldung 2016 / 0370843 A1 zeigt ein Informationsverarbeitungssystem mit einem "intelligenten" Energie-Verwaltungssystem, das einen Energieverbrauch eines Mobilgerät basierend auf einer Nutzung des Mobilgeräts vorhersagt.

Es besteht der Bedarf nach einem verbesserten Konzept für eine Datenübertragung durch Mobilgeräte.

Diesem Bedarf wird durch die unabhängigen Ansprüche Rechnung getragen.

Ausführungsbeispiele schaffen eine Vorrichtung, ein Verfahren und ein Computerprogramm für ein Mobilgerät. Das Mobilgerät kann beispielsweise ein Fahrzeug, etwa ein Automobil oder ein Kraftrad sein, oder etwa ein (programmierbares) Mobiltelefon (auch engl. Smartphone) oder ein Tablet-Computer. Die Vorrichtung kann ausgebildet sein, um anhand eines Energievorrats des Mobilgeräts zu bestimmen, ob der Energievorrat voraussichtlich bald aufgefüllt wird, etwa an einer Tankstelle oder zu Hause an einem Ladekabel. Ist dies der Fall, so ist die Vorrichtung ausgebildet, eine Datenübertagung zu verzögern und um dann vor oder bei dem Nachfüllen des Energievorrats über ein lokales drahtloses Netzwerk durchzuführen. Dabei wird die Datenübertragung bis zu einem nächsten Nachfüllen des Energievorrats, bis zu einer nächsten Verfügbarkeit einer Verbindung mit dem zweiten Mobilkommunikationssystem, oder bis zu einem Zeitpunkt, der durch den Zeit-Schwellenwert definiert ist, verzögert. Ist der nächste Zeitpunkt zum Nachfüllen des Energievorrats noch zu weit in der Zukunft, so kann die Vorrichtung ausgebildet sein, um die Datenübertragung über ein zelluläres Mobilfunksystem, z.B. LTE oder UMTS, durchzuführen.

Ausführungsbeispiele schaffen eine Vorrichtung für ein Mobilgerät. Die Vorrichtung umfasst ein Sende-Empfänger-Modul, ausgebildet zur Kommunikation in einem ersten Mobilkommunikationssystem und in einem zweiten Mobilkommunikationssystem. Die Vorrichtung umfasst ferner ein Kontrollmodul, ausgebildet zum Bestimmen, ob eine Zeitspanne bis zu einem voraussichtlichen nächsten Zeitpunkt zum Nachfüllen eines Energievorrats des Mobilgeräts oberhalb eines Zeit-Schwellenwerts liegt. Das Kontrollmodul ist ferner ausgebildet zum Nutzen des ersten Mobilkommunikationssystems für eine Datenübertragung, falls die Zeitspanne oberhalb des Zeit-Schwellenwerts liegt. Das Kontrollmodul ist ferner ausgebildet zum Verzögern der Datenübertragung bis zu einem nächsten Nachfüllen des Energievorrats, bis zu einer nächsten Verfügbarkeit einer Verbindung mit dem zweiten Mobilkommunikationssystem, oder bis zu einem Zeitpunkt, der durch den Zeit-Schwellenwert definiert ist, falls die Zeitspanne unterhalb des Zeit-Schwellenwerts liegt. Das Kontrollmodul ist ferner ausgebildet zum Nutzen des zweiten Mobilkommunikationssystems für die Datenübertragung, falls bei oder vor dem nächsten Zeitpunkt zum Nachfüllen des Energievorrats des Mobilgeräts eine Verbindung mit dem zweiten Mobilkommunikationssystem zur Verfügung steht.

Durch die Vorrichtung kann eine Abwägung getroffen werden, ob sich das Mobilgerät innerhalb eines vertretbaren Zeitrahmens im Abdeckungsbereich des zweiten Mobilkommunikationssystems befindet. So können Datenübertragungen zeitnah über das erste Mobilkommunikationssystem ausgeführt werden, sofern dies nicht zu erwarten ist, und ansonsten kostenreduzierend auf eine Verfügbarkeit des zweiten Mobilkommunikationssystems gewartet werden, etwa beim Nachfüllen des Energievorrats.

Beispielsweise kann das Kontrollmodul ferner ausgebildet sein zum Bestimmen, ob eine Wahrscheinlichkeit, dass sich das Mobilgerät zum voraussichtlichen nächsten Zeitpunkt zum Nachfüllen des Energievorrats in einem Abdeckungsbereich des zweiten Mobilkommunikationssystems befindet, kleiner ist als ein Wahrscheinlichkeits-Schwellenwert. Das Kontrollmodul kann ferner ausgebildet sein, um das erste Mobilkommunikationssystem für die Datenübertragung zu nutzen, falls die Wahrscheinlichkeit kleiner ist als der Wahrscheinlichkeits-Schwellenwert. Durch eine Wahrscheinlichkeitsfunktion kann ferner eine Wahrscheinlichkeit einbezogen werden, dass das Mobilgerät beim Nachfüllen des Energievorrats sich in dem Abdeckungsbereich des zweiten Mobilkommunikationssystems befindet.

Beispielsweise kann das Kontrollmodul ausgebildet sein, um eine Position des Mobilgeräts zu bestimmen. Das Kontrollmodul kann ausgebildet sein, um basierend auf der Position des Mobilgeräts zu bestimmen, ob die Zeitspanne bis zu einem voraussichtlichen nächsten Zeitpunkt zum Nachfüllen des Energievorrats des Mobilgeräts oberhalb des Zeit-Schwellenwerts liegt. Beispielsweise kann das Kontrollmodul ausgebildet sein, um festzustellen, ob sich das Mobilgerät in der Nähe oder auf dem Weg zu einem bevorzugten Ort für das Nachfüllen des Mobilgeräts befindet.

Beispielsweise kann das Kontrollmodul ausgebildet sein, um basierend auf einer weiteren Zeitspanne seit einem letzten Zeitpunkt zum Nachfüllen des Energievorrates des Mobilgeräts zu bestimmen, ob die Zeitspanne bis zu einem voraussichtlichen nächsten Zeitpunkt zum Nachfüllen des Energievorrats des Mobilgeräts oberhalb des Zeit-Schwellenwerts liegt. So kann beispielsweise das Kontrollmodul ausgebildet sein, um basierend auf einer Nachfüll-Historie abzuschätzen, wann der voraussichtlich nächste Zeitpunkt zum Nachfüllen des Energievorrats (voraussichtlich) sein wird.

Beispielsweise kann das Kontrollmodul ausgebildet sein, um basierend auf einem Energieverbrauch des Mobilgeräts zu bestimmen, ob die Zeitspanne bis zu einem voraussichtlichen nächsten Zeitpunkt zum Nachfüllen des Energievorrats des Mobilgeräts oberhalb des Zeit-Schwellenwerts liegt. Beispielsweise kann das Kontrollmodul ausgebildet sein, um basierend auf dem Energieverbrauch und basierend auf dem Energievorrat zu berechnen, wann der voraussichtliche nächste Zeitpunkt zum Nachfüllen des Energievorrats (voraussichtlich) sein wird.

Beispielsweise kann das Nachfüllen des Energievorrats des Mobilgeräts einem Nachfüllen des Energievorrats mit elektrischer Energie, mit Benzin/Diesel, mit Erdgas, mit Autogas oder mit Wasserstoff entsprechen.

Beispielsweise kann das Mobilgerät einem Fahrzeug entsprechen. Bei einem Fahrzeug können beispielsweise Betriebssystemaktualisierungen oder Kartendaten als Datenübertragungen durchgeführt werden, wenn das zweite Mobilkommunikationssystem verfügbar ist, oder, falls die Zeitspanne zu groß ist, über das erste Mobilkommunikationssystem, etwa während der Fahrt oder in einem Parkzustand.

Beispielsweise kann das Kontrollmodul ferner ausgebildet sein, um zu bestimmen, ob eine weitere Zeitspanne bis zu einem voraussichtlichen nächsten Fahrzeug-Serviceleistung am Fahrzeug oberhalb des Zeit-Schwellenwerts liegt. Das Kontrollmodul kann ausgebildet sein, um das erste Mobilkommunikationssystem für die Datenübertragung zu nutzen, falls die Zeitspanne und die weitere Zeitspanne oberhalb des Zeitschwellenwerts liegen. So kann beispielsweise die Datenübertragung verzögert werden, falls ein Service-Aufenthalt des Fahrzeugs ansteht.

Alternativ kann das Mobilgerät einem Mobiltelefon, einem programmierbaren Mobiltelefon, einer programmierbaren Uhr oder einem Tablet-Computer entsprechen. Wird das Mobiltelefon aufgeladen, so befindet es sich häufig in einem Abdeckungsbereich eines kabellosen Heim-Netzwerks (WLANs) eines Benutzers des Mobiltelefons.

Beispielsweise kann das erste Mobilkommunikationssystem einem zellulären Mobilfunksystem entsprechen. Das zweite Mobilkommunikationssystem kann einem drahtlosen lokalen Netzwerk entsprechen. Beispielsweise kann eine Datenübertragung über das drahtlose lokale Netzwerk eine Belastung des ersten Mobilkommunikationssystem reduzieren, schnellere Datenübertragungen ermöglichen und Kosten für die Datenübertragung reduzieren.

Beispielsweise kann das erste Mobilkommunikationssystem einem Mobilkommunikationssystem mit einer ersten höheren Reichweite entsprechen und das zweite Mobilkommunikationssystem kann einem Mobilkommunikationssystem mit einer zweiten niedrigeren Reichweite entsprechen.

Beispielsweise kann die Datenübertragung einer Übertragung von Daten mit mehr als 50 Megabyte Datenvolumen entsprechen. Datenübertragungen mit einem großen Datenvolumen können beispielsweise zuverlässiger und schneller über das zweite Mobilkommunikationssystem durchgeführt werden.

Beispielsweise kann die Datenübertragung einer Übertragung von Kartendaten, von Programm-Aktualisierungen von Computerprogrammen des Mobilgeräts, von Aktualisierungen eines Betriebssystems des Mobilgeräts, von Schwarmdaten und/oder von Mediendaten entsprechen. Solche Datenübertragungen weisen häufig ein großes Datenvolumen auf.

Ausführungsbeispiele schaffen ferner ein Verfahren für ein Mobilgerät. Das Verfahren umfasst Bestimmen, ob eine Zeitspanne bis zu einem voraussichtlichen nächsten Zeitpunkt zum Nachfüllen eines Energievorrats des Mobilgeräts unterhalb eines Zeit-Schwellenwerts liegt. Das Verfahren umfasst ferner Nutzen eines ersten Mobilkommunikationssystems für die Datenübertragung, falls die Zeitspanne oberhalb des Zeit-Schwellenwerts liegt. Das Verfahren umfasst ein Verzögern der Datenübertragung bis zu einem nächsten Nachfüllen des Energievorrats, bis zu einer nächsten Verfügbarkeit einer Verbindung mit dem zweiten Mobilkommunikationssystem, oder bis zu einem Zeitpunkt, der durch den Zeit-Schwellenwert definiert ist, falls die Zeitspanne unterhalb des Zeit-Schwellenwerts liegt. Das Verfahren umfasst ferner Nutzen eines zweiten Mobilkommunikationssystems für die Datenübertragung, falls bei oder vor dem nächsten Zeitpunkt zum Nachfüllen des Energievorrats des Mobilgeräts eine Verbindung mit dem zweiten Mobilkommunikationssystem zur Verfügung steht.

Ausführungsbeispiele schaffen ferner ein Programm mit einem Programmcode zum Durchführen des Verfahrens, wenn der Programmcode auf einem Computer, einem Prozessor, einem Kontrollmodul oder einer programmierbaren Hardwarekomponente ausgeführt wird.

Weitere vorteilhafte Ausgestaltungen werden nachfolgend anhand der in den Zeichnungen dargestellten Ausführungsbeispiele, auf welche Ausführungsbeispiele generell jedoch nicht insgesamt beschränkt sind, näher beschrieben. Es zeigen:
Fig. 1 zeigt ein Blockdiagramm einer Vorrichtung für ein Mobilgerät;
Fig. 1a zeigt ein Flussdiagramm eines entsprechenden Verfahrens für das Mobilgerät; und
Fig. 2 zeigt ein Blockdiagramm einer beispielhaften Vorrichtung für ein Fahrzeug.

Verschiedene Ausführungsbeispiele werden nun ausführlicher unter Bezugnahme auf die beiliegenden Zeichnungen beschrieben, in denen einige Ausführungsbeispiele dargestellt sind. In den Figuren können die Dickenabmessungen von Linien, Schichten und/oder Regionen um der Deutlichkeit Willen übertrieben dargestellt sein.

Bei der nachfolgenden Beschreibung der beigefügten Figuren, die lediglich einige exemplarische Ausführungsbeispiele zeigen, können gleiche Bezugszeichen gleiche oder vergleichbare Komponenten bezeichnen. Ferner können zusammenfassende Bezugszeichen für Komponenten und Objekte verwendet werden, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die im Bereich der Erfindung liegen, abdecken sollen. Gleiche Bezugszeichen bezeichnen in der gesamten Figurenbeschreibung gleiche oder ähnliche Elemente.

Man beachte, dass ein Element, das als mit einem anderen Element "verbunden" oder "verkoppelt" bezeichnet wird, mit dem anderen Element direkt verbunden oder verkoppelt sein kann oder dass dazwischenliegende Elemente vorhanden sein können. Wenn ein Element dagegen als "direkt verbunden" oder "direkt verkoppelt" mit einem anderen Element bezeichnet wird, sind keine dazwischenliegenden Elemente vorhanden. Andere Begriffe, die verwendet werden, um die Beziehung zwischen Elementen zu beschreiben, sollten auf ähnliche Weise interpretiert werden (z.B., "zwischen" gegenüber "direkt dazwischen", "angrenzend" gegenüber "direkt angrenzend" usw.).

Die Terminologie, die hierin verwendet wird, dient nur der Beschreibung bestimmter Ausführungsbeispiele und soll die Ausführungsbeispiele nicht beschränken. Wie hierin verwendet, sollen die Singularformen "einer," "eine", "eines " und "der, die, das" auch die Pluralformen beinhalten, solange der Kontext nicht eindeutig etwas anderes angibt. Ferner sei klargestellt, dass die Ausdrücke wie z.B. "beinhaltet", "beinhaltend", "aufweist", "umfasst", "umfassend" und/oder "aufweisend", wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.

Solange nichts anderes definiert ist, haben sämtliche hierin verwendeten Begriffe (einschließlich von technischen und wissenschaftlichen Begriffen) die gleiche Bedeutung, die ihnen ein Durchschnittsfachmann auf dem Gebiet, zu dem die Ausführungsbeispiele gehören, beimisst. Ferner sei klargestellt, dass Ausdrücke, z.B. diejenigen, die in allgemein verwendeten Wörterbüchern definiert sind, so zu interpretieren sind, als hätten sie die Bedeutung, die mit ihrer Bedeutung im Kontext der einschlägigen Technik konsistent ist, und nicht in einem idealisierten oder übermäßig formalen Sinn zu interpretieren sind, solange dies hierin nicht ausdrücklich definiert ist.

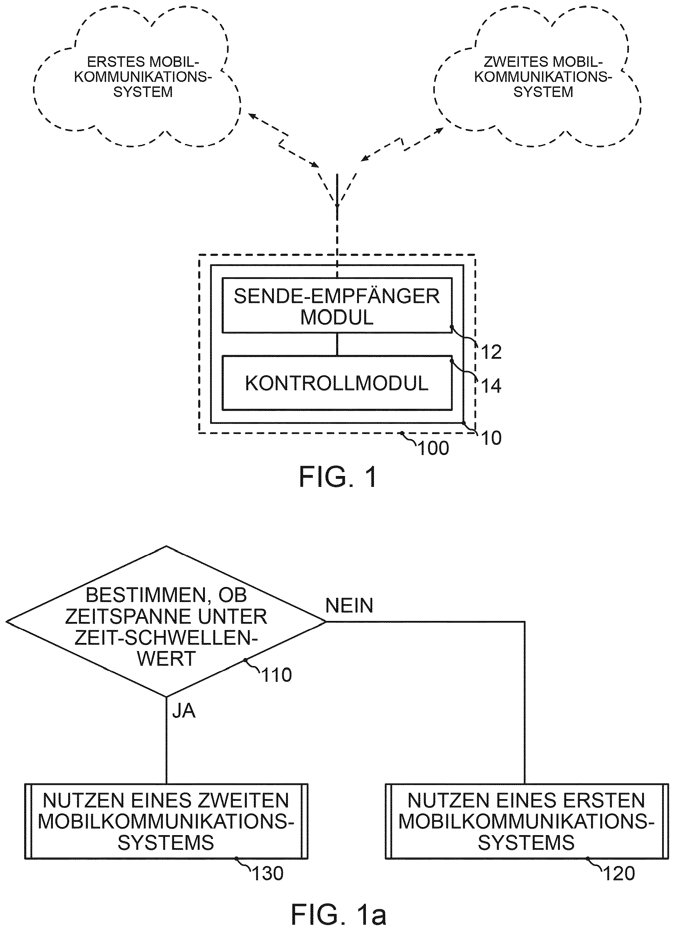

Fig. 1 zeigt ein Blockdiagramm einer Vorrichtung 10 für ein Mobilgerät 100. Die Vorrichtung umfasst ein Sende-Empfänger-Modul 12, ausgebildet zur Kommunikation in einem ersten Mobilkommunikationssystem und in einem zweiten Mobilkommunikationssystem. Die Vorrichtung 10 umfasst ferner ein Kontrollmodul 14, ausgebildet zum Bestimmen, ob eine Zeitspanne bis zu einem voraussichtlichen nächsten Zeitpunkt zum Nachfüllen eines Energievorrats des Mobilgeräts 100 oberhalb eines Zeit-Schwellenwerts liegt. Das Kontrollmodul 14 ist ferner ausgebildet zum Nutzen des ersten Mobilkommunikationssystems für eine Datenübertragung (über das erste Sende-Empfänger-Modul 12), falls die Zeitspanne oberhalb des Zeit-Schwellenwerts liegt und Nutzen des zweiten Mobilkommunikationssystems für die Datenübertragung, falls bei oder vor dem nächsten Zeitpunkt zum Nachfüllen des Energievorrats des Mobilgeräts 100 eine Verbindung mit dem zweiten Mobilkommunikationssystem zur Verfügung steht.

Fig. 1a zeigt ein Flussdiagramm eines entsprechenden Verfahrens für das Mobilgerät 110. Das Verfahren umfasst Bestimmen 110, ob die Zeitspanne bis zu dem voraussichtlichen nächsten Zeitpunkt zum Nachfüllen des Energievorrats des Mobilgeräts 100 unterhalb des Zeit-Schwellenwerts liegt. Das Verfahren umfasst ferner Nutzen 120 des ersten Mobilkommunikationssystems für die Datenübertragung, falls die Zeitspanne oberhalb des Zeit-Schwellenwerts liegt. Das Verfahren umfasst ferner Nutzen 130 des zweiten Mobilkommunikationssystems für die Datenübertragung, falls bei oder vor dem nächsten Zeitpunkt zum Nachfüllen des Energievorrats des Mobilgeräts 100 die Verbindung mit dem zweiten Mobilkommunikationssystem zur Verfügung steht. Die nachfolgende Beschreibung kann sich sowohl auf die Vorrichtung 10 als auch auf das entsprechende Verfahren für das Mobilgerät 100 beziehen.

Beispielsweise kann das Mobilgerät 100 einem Fahrzeug (oder einem Informationssystem eines Fahrzeugs) oder einem Mobiltelefon, einem programmierbaren Mobiltelefon, einer programmierbaren Uhr oder einem Tablet-Computer entsprechen.

Beispielsweise kann das erste Mobilkommunikationssystem einem Mobilkommunikationssystem mit einer ersten höheren Reichweite entsprechen. Beispielsweise kann das erste Mobilkommunikationssystem einen Abdeckungsbereich (einer Zelle des ersten Mobilkommunikationssystem) mit einem Radius von mehr als 100m (oder mehr als 200m, mehr als 500m, mehr als 1 km) aufweisen. Das zweite Mobilkommunikationssystem kann einem Mobilkommunikationssystem mit einer zweiten niedrigeren Reichweite entsprechen. Beispielsweise kann das zweite Mobilkommunikationssystem einen Abdeckungsbereich (eines Zugangspunkts des zweiten Mobilkommunikationssystems mit einem Radius von weniger als 100m (oder weniger als 50m, weniger als 20m) entsprechen. Beispielsweise kann ein Abdeckungsbereich einem Bereich um eine Basisstation eines Mobilkommunikationssystems entsprechen, in dem eine Signalstärke der Basisstation zumindest 10% einer maximalen Datenübertragungsgeschwindigkeit der Basisstation bei einer Datenübertragung zu dem Mobilgerät 100 ermöglicht.

Beispielsweise kann das erste Mobilkommunikationssystem einem zellulären Mobilfunksystem entsprechen. Beispielsweise kann das erste Mobilkommunikationssystem einem zellulären Mobilkommunikationssystem der Gruppe von Global System for Mobile telecommunications (GSM), General Packet Radio Service (GPRS), Enhanced Data rates for GSM Evolution (EDGE), Universal Mobile Telecommunication System (UMTS), Long Term Evolution, ein Mobilfunksystem der 5. Generation (5G), und ein Mobilfunksystem gemäß zukünftigen Standards zu entsprechen. Das Sende-Empfänger-Modul 12 kann ausgebildet sein, um in zumindest einem zellulären Mobilkommunikationssystem der Gruppe von Global System for Mobile telecommunications (GSM), General Packet Radio Service (GPRS), Enhanced Data rates for GSM Evolution (EDGE), Universal Mobile Telecommunication System (UMTS), Long Term Evolution, ein Mobilfunksystem der 5. Generation (5G), und ein Mobilfunksystem gemäß zukünftigen Standards zu kommunizieren.

Das zweite Mobilkommunikationssystem kann einem drahtlosen lokalen Netzwerk (auch engl. Wireless Local Area Network, WLAN), einem persönlichen Netzwerk (auch engl. Personal Area Network, PAN, kleiner als WLAN), einem Stadtgebiets-Netzwerk (auch engl. Metropolitan Area Network, MAN, größer als WLAN), einem Internet der Dinge-Netzwerk (auch engl. Internet of Things, loT) oder einem Mikrowellenbasierten Mobilkommunikationssystem entsprechen, etwa einem WiMAX-System (Worldwide Interoperability for Microwave Access).

Beispielsweise kann die Kommunikation mit dem ersten Mobilkommunikationssystem und dem zweiten Mobilkommunikationssystem ein Empfangen von Daten (etwa von Datenpaketen) und ein Senden von Daten umfassen. Die Datenübertragung ist in der Kommunikation umfasst. Beispielsweise kann die Datenübertragung einem Datenempfang (auch engl. Download) oder einer Datensendung (auch engl. Upload) entsprechen. Beispielsweise kann die Datenübertragung einer Übertragung von Daten mit mehr als 50 Megabyte (oder mehr als 100 Megabyte, mehr als 200 Megabyte, mehr als 500 Megabyte, mehr als 1 Gigabyte) Datenvolumen entsprechen. Beispielsweise kann die Datenübertragung einer Übertragung von Kartendaten, von Programm-Aktualisierungen von Computerprogrammen des Mobilgeräts 100, von Aktualisierungen eines Betriebssystems des Mobilgeräts 100, von Schwarmdaten (etwa Sensordaten oder Daten, die durch das Mobilgerät bestimmt oder berechnet wurden) und/oder von Mediendaten entsprechen. Beispielsweise kann der Zeit-Schwellenwert abhängig von einem Datenvolumen der Datenübertragung sein. Beispielsweise kann der Zeit-Schwellenwert einem ersten höheren Zeit-Schwellenwert bei einem ersten größeren Datenvolumen und einem zweiten niedrigeren Zeit-Schwellenwert bei einem zweiten kleineren Datenvolumen entsprechen.

Beispielsweise kann das Kontrollmodul 14 ausgebildet sein, um den voraussichtlichen nächsten Zeitpunkt zum Nachfüllen des Energievorrats basierend auf einem aktuellen Energievorrat des Mobilgeräts 100 zu berechnen. Alternativ oder zusätzlich kann das Kontrollmodul 14 ausgebildet sein, um die (voraussichtliche) Zeitspanne bis zu dem voraussichtlichen nächsten Zeitpunkt zum Nachfüllen des Energievorrats zu berechnen, etwa als Zeitspanne, als Auswahl einer Gruppe von möglichen Zeitspannen (etwa weniger als eine Stunde, weniger als ein Tag, weniger als zwei Tage, weniger als 5 Tage etc.) oder in einer binären Entscheidung (über oder unter dem Zeit-Schwellenwert). Der Zeit-Schwellenwert kann beispielsweise ein absolutes Datum und/oder eine absolute Uhrzeit sein. Alternativ kann der Zeit-Schwellenwert eine relative Zeitdauer definieren, etwa ab dem Zeitpunkt, an dem das Kontrollmodul 14 eine Anfrage über die Datenübertragung erhält. Die Zeitspanne bis zum voraussichtlich nächsten Zeitpunkt zum Nachfüllen des Energievorrats kann oberhalb des Zeit-Schwellenwerts liegen, falls die Zeitspanne länger als die relative Zeitdauer ist oder falls die Zeitspanne zu einem Zeitpunkt zu Ende geht, die später liegt als das absolute Datum/die absolute Uhrzeit.

Beispielsweise kann das Kontrollmodul 14 ausgebildet sein, um eine Position des Mobilgeräts 100 zu bestimmen. Beispielsweise kann die Vorrichtung ein Positionierungsmodul umfassen, etwa ein Satellitennavigations-Positionierungsmodul. Das Kontrollmodul 14 kann ausgebildet sein, um die Position des Mobilgeräts über das Positionierungsmodul zu bestimmen. Alternativ oder zusätzlich kann das Kontrollmodul 14 ausgebildet sein, um die Position des Mobilgeräts über das Sende-Empfänger-Modul 12 zu bestimmen, etwa basierend auf einer Distanz zu zwei oder mehreren Basisstationen des ersten Mobilkommunikationssystems und/oder des zweiten Mobilkommunikationssystems. Das Kontrollmodul 14 kann ausgebildet sein, um basierend auf der Position des Mobilgeräts 100 zu bestimmen, ob die Zeitspanne bis zu dem voraussichtlichen nächsten Zeitpunkt zum Nachfüllen des Energievorrats des Mobilgeräts 100 oberhalb des Zeit-Schwellenwerts liegt. Beispielsweise kann das Kontrollmodul 14 ausgebildet sein, um den voraussichtlichen nächsten Zeitpunkt zum Nachfüllen des Energievorrats basierend auf der Position des Mobilgeräts zu berechnen. Beispielsweise kann das Kontrollmodul 14 ausgebildet sein, um den voraussichtlichen nächsten Zeitpunkt zum Nachfüllen des Energievorrats basierend darauf zu bestimmen, ob sich das Mobilgerät in der Nähe eines für das Nachfüllen des Energievorrats genutzten Orts oder auf dem Weg zu einem für das Nachfüllen des Energievorrats genutzten Ort befindet.

Beispielsweise kann das Kontrollmodul 14 ausgebildet sein, um basierend auf einer weiteren Zeitspanne seit einem letzten Zeitpunkt zum Nachfüllen des Energievorrates des Mobilgeräts zu bestimmen, ob die Zeitspanne bis zu einem voraussichtlichen nächsten Zeitpunkt zum Nachfüllen des Energievorrats des Mobilgeräts 100 oberhalb des Zeit-Schwellenwerts liegt. Beispielsweise kann das Kontrollmodul 14 ausgebildet sein, um den voraussichtlichen nächsten Zeitpunkt zum Nachfüllen des Energievorrats basierend auf der weiteren Zeitspanne seit dem letzten Zeitpunkt zum Nachfüllen zu berechnen. Beispielsweise kann das Kontrollmodul 14 ausgebildet sein, das Nachfüllen des Energievorrats zu protokollieren. Beispielsweise kann das Kontrollmodul 14 ausgebildet sein, um einen Zeitpunkt, eine Häufigkeit und/oder eine Zeitdauer zwischen aufeinanderfolgenden Nachfüllvorgängen zu protokollieren. Beispielsweise kann das Kontrollmodul 14 ausgebildet sein, um eine voraussichtliche Zeitdauer zwischen zwei aufeinanderfolgenden Nachfüllvorgängen (etwa basierend auf dem Protokoll oder basierend auf einer Statistik über die Nachfüllvorgänge) zu berechnen. Das Kontrollmodul 14 kann ausgebildet sein, um den voraussichtlich nächsten Zeitpunkt zum Nachfüllen des Energievorrats basierend auf der voraussichtlichen Zeitdauer zu bestimmen. Das Kontrollmodul 14 kann ausgebildet sein, um basierend auf der voraussichtlichen Zeitdauer zu bestimmen, ob die Zeitspanne bis zu einem voraussichtlichen nächsten Zeitpunkt zum Nachfüllen des Energievorrats des Mobilgeräts 100 oberhalb des Zeit-Schwellenwerts liegt. Beispielsweise kann das Kontrollmodul 14 ausgebildet sein, um den voraussichtlichen nächsten Zeitpunkt zum Nachfüllen des Energievorrats basierend auf einem durchschnittlichen Rest-Energievorrat beim Nachfüllen zu berechnen. Beispielsweise kann das Kontrollmodul 14 ausgebildet sein, um basierend auf dem durchschnittlichen Rest-Energievorrat beim Nachfüllen zu bestimmen, ob die Zeitspanne bis zu einem voraussichtlichen nächsten Zeitpunkt zum Nachfüllen des Energievorrats des Mobilgeräts 100 oberhalb des Zeit-Schwellenwerts liegt.

Beispielsweise kann das Kontrollmodul 14 ausgebildet sein, um basierend auf einem Energieverbrauch des Mobilgeräts 100 zu bestimmen, ob die Zeitspanne bis zu einem voraussichtlichen nächsten Zeitpunkt zum Nachfüllen des Energievorrats des Mobilgeräts 100 oberhalb des Zeit-Schwellenwerts liegt. Beispielsweise kann das Kontrollmodul 14 ausgebildet sein, um den voraussichtlichen nächsten Zeitpunkt zum Nachfüllen des Energievorrats basierend auf dem Energieverbrauch des Mobilgeräts 100 zu bestimmen. Beispielsweise kann der Energieverbrauch einem Energieverbrauch pro Zeiteinheit (oder einem Energieverbrauch pro Distanz) entsprechen. Beispielsweise kann das Kontrollmodul 14 ausgebildet sein, um einen voraussichtlichen Energieverbrauch bis zu dem Zeit-Schwellenwert zu bestimmen (zu schätzen), und basierend auf dem voraussichtlichen Energieverbrauch zu bestimmen, und ob die Zeitspanne bis zu einem voraussichtlichen nächsten Zeitpunkt zum Nachfüllen des Energievorrats des Mobilgeräts 100 oberhalb des Zeit-Schwellenwerts liegt.

Beispielsweise kann das Kontrollmodul 14 ausgebildet sein, um die Datenübertragung über das erste Mobilkommunikationssystem zu starten, falls die Zeitspanne oberhalb des Zeit-Schwellenwerts liegt (und etwa bei einer Verfügbarkeit einer Verbindung zu dem zweiten Mobilkommunikationssystem über das zweite Mobilkommunikationssystem fortzusetzen). Beispielsweise kann das Kontrollmodul 14 ausgebildet sein, um Daten der Datenübertragung über das erste Mobilkommunikationssystem zu übertragen, falls die Zeitspanne oberhalb des Zeit-Schwellenwerts liegt. Beispielsweise kann das Kontrollmodul 14 ausgebildet sein, um periodisch während der Datenübertragung zu überprüfen, ob das zweite Mobilkommunikationssystem für die Datenübertragung zur Verfügung steht, und die Datenübertragung über das zweite Mobilkommunikationssystem fortzusetzen, falls das zweite Mobilkommunikationssystem für die Datenübertragung zur Verfügung steht.

Beispielsweise kann das Kontrollmodul 14 ausgebildet sein, um die Datenübertragung zu verzögern, falls die Zeitspanne unterhalb des Zeit-Schwellenwerts liegt, etwa bis zum nächsten Nachfüllen des Energievorrats, bis zu einer nächsten Verfügbarkeit einer Verbindung mit dem zweiten Mobilkommunikationssystems oder bis zu einem Zeitpunkt, der durch den Zeit-Schwellenwert definiert ist.

Beispielsweise kann die Verbindung mit dem zweiten Mobilkommunikationssystem zur Verfügung stehen, falls sich das Mobilgerät 100 in einem Abdeckungsbereich des zweiten Mobilkommunikationssystems befindet. Beispielsweise kann das Kontrollmodul ausgebildet sein, um das zweite Mobilkommunikationssystem für die Datenübertragung zu nutzen, falls zwischen einem Anfallen der Datenübertragung und dem Zeitpunkt, der durch den Zeit-Schwellenwert definiert wird, eine Verbindung mit dem zweiten Mobilkommunikationssystem zur Verfügung steht. Beispielsweise kann das Kontrollmodul 14 ausgebildet sein, periodisch oder ereignisbasiert zu prüfen, ob die Verbindung mit dem zweiten Mobilkommunikationssystem zur Verfügung steht/sich das Mobilgerät 100 in einem Abdeckungsbereich des zweiten Mobilkommunikationssystems befindet. Beispielsweise kann das Kontrollmodul 14 ausgebildet sein, um die Datenübertragung durchzuführen, wenn die Verbindung mit dem zweiten Mobilkommunikationssystem zur Verfügung steht/sich das Mobilgerät in einem Abdeckungsbereich des zweiten Mobilkommunikationssystems befindet. Befindet sich das Mobilgerät 100 bis zu einem Zeitpunkt, der durch den Zeit-Schwellenwert definiert ist nicht in einem Abdeckungsbereich des zweiten Mobilkommunikationssystems (steht bis zu dem Zeitpunkt, der durch den Zeit-Schwellenwert definiert ist keine Verbindung mit dem zweiten Mobilkommunikationssystem zur Verfügung), so kann das Kontrollmodul 14 ausgebildet sein, um das erste Mobilkommunikationssystem für die Datenübertragung zu nutzen.

Beispielsweise kann das Kontrollmodul 14 ferner ausgebildet sein zum Bestimmen, ob eine Wahrscheinlichkeit, dass sich das Mobilgerät 100 zum voraussichtlichen nächsten Zeitpunkt zum Nachfüllen des Energievorrats in einem Abdeckungsbereich des zweiten Mobilkommunikationssystems befindet, kleiner ist als ein Wahrscheinlichkeits-Schwellenwert. Beispielsweise kann das Kontrollmodul 14 ausgebildet sein, um die Wahrscheinlichkeit dass sich das Mobilgerät 100 zum voraussichtlichen nächsten Zeitpunkt zum Nachfüllen des Energievorrats in einem Abdeckungsbereich des zweiten Mobilkommunikationssystems befindet, zu berechnen. Beispielsweise kann das Kontrollmodul 14 ausgebildet sein, um bei dem (jedem) Nachfüllen des Energievorrats zu prüfen und/oder zu protokollieren, ob sich das Mobilgerät 100 in einem Abdeckungsbereich des zweiten Mobilkommunikationssystems befindet. Beispielsweise kann das Kontrollmodul 14 ausgebildet sein, um eine gleitende Wahrscheinlichkeit (etwa basierend auf allen vorhergehenden Nachfüllvorgängen, basierend auf den Nachfüllvorgängen innerhalb einer Zeitspanne oder basierend auf einer vordefinierten Menge von vorhergehenden Nachfüllvorgängen) dafür zu berechnen, dass sich das Mobilgerät 100 bei dem nächsten Nachfüllvorgang in einem Abdeckungsbereich des zweiten Mobilkommunikationssystems befindet. Beispielsweise kann das Kontrollmodul 14 ferner ausgebildet sein, basierend auf der Position des Mobilgeräts zu Bestimmen, ob die Wahrscheinlichkeit, dass sich das Mobilgerät 100 zum voraussichtlichen nächsten Zeitpunkt zum Nachfüllen des Energievorrats in einem Abdeckungsbereich des zweiten Mobilkommunikationssystems befindet, kleiner ist als der Wahrscheinlichkeits-Schwellenwert. Beispielsweise kann das Kontrollmodul ferner ausgebildet sein, um das erste Mobilkommunikationssystem für die Datenübertragung zu nutzen, falls die Wahrscheinlichkeit kleiner ist als der Wahrscheinlichkeits-Schwellenwert. Beispielsweise kann das Kontrollmodul 14 ausgebildet sein, um basierend auf der Wahrscheinlichkeit und basierend auf der Zeitspanne zu entscheiden, ob die Datenübertragung über das erste Mobilkommunikationssystem oder über das zweite Mobilkommunikationssystem durchgeführt oder gestartet wird. Beispielsweise kann das Kontrollmodul 14 ausgebildet sein, um das erste Mobilkommunikationssystem für die Datenübertragung zu nutzen, falls die Zeitspanne über dem Zeit-Schwellenwert und/oder die Wahrscheinlichkeit unter dem Wahrscheinlichkeits-Schwellenwert liegt. Beispielsweise kann der Wahrscheinlichkeits-Schwellenwert einer anteiligen Wahrscheinlichkeit entsprechen, etwa 70% oder 0,7.

In manchen Ausführungsbeispielen kann das Mobilgerät etwa einem Fahrzeug entsprechen, beispielsweise einem Automobil, einem Lastkraftwagen, einem Kraftrad, einem Schiff, einem Zug oder einem autonom fahrenden Fahrzeug. Beispielsweise kann das Nachfüllen des Energievorrats des Mobilgeräts 100 einem Nachfüllen des Energievorrats mit elektrischer Energie, mit einem Flüssigkraftstoff, mit Benzin, mit Diesel, mit Erdgas, mit Autogas oder mit Wasserstoff entsprechen.

Beispielsweise kann das Kontrollmodul 14 ferner ausgebildet sein, um zu bestimmen, ob eine weitere Zeitspanne bis zu einem voraussichtlichen nächsten Fahrzeug-Serviceintervall am Fahrzeug oberhalb des Zeit-Schwellenwerts liegt. Beispielsweise kann das Kontrollmodul 14 ausgebildet sein, um die weitere Zeitspanne basierend auf einem Fehlerzustand, basierend auf einem Wartungszustand oder basierend auf einem Serviceintervall des Mobilgeräts 100 zu berechnen. Beispielsweise kann das Kontrollmodul 14 ausgebildet sein, um das erste Mobilkommunikationssystem für die Datenübertragung zu nutzen, falls die Zeitspanne und die weitere Zeitspanne oberhalb des Zeit-Schwellenwerts liegen.

Alternativ kann das Mobilgerät 100 einem Mobiltelefon, einem programmierbaren Mobiltelefon (etwa einem Smartphone), einer programmierbaren Uhr oder einem Tablet-Computer entsprechen. Beispielsweise kann das Nachfüllen des Energievorrats des Mobilgeräts 100 einem Nachfüllen des Energievorrats mit elektrischer Energie entsprechen. Beispielsweise kann das Nachfüllen des Energievorrats einem Anschließen des Mobilgeräts an ein Lade-Netzteil entsprechen. Beispielsweise kann das Nachfüllen des Energievorrats einem Drahtlosen Ladevorgang entsprechen.

Ausführungsbeispiele schaffen ferner das Mobilgerät 100 umfassend die Vorrichtung für das Mobilgerät 100. Das Kontrollmodul 14 ist mit dem Sende-Empfänger-Modul 12 gekoppelt. In Ausführungsbeispielen kann das Sende-Empfänger-Modul 12 typische Sender- bzw. Empfängerkomponenten enthalten. Darunter können beispielsweise ein oder mehrere Antennen, ein oder mehrere Filter, ein oder mehrere Mischer, ein oder mehrere Verstärker, ein oder mehrere Diplexer, ein oder mehrere Duplexer, usw. fallen. In Ausführungsbeispielen kann das Kontrollmodul 14 einem beliebigen Controller oder Prozessor oder einer programmierbaren Hardwarekomponente entsprechen. Beispielsweise kann das Sende-Empfänger-Modul 12 zwei separate Sende-Empfänger-Untermodule umfassen, etwa ein erstes Sende-Empfänger-Untermodul zur Kommunikation mit dem ersten Mobilkommunikationssystem und ein zweites Sende-Empfänger-Untermodul zur Kommunikation mit dem zweiten Mobilkommunikationssystem. Beispielsweise kann das Kontrollmodul 14 auch als Software realisiert sein, die für eine entsprechende Hardwarekomponente programmiert ist. Insofern kann das Kontrollmodul 14 als programmierbare Hardware mit entsprechend angepasster Software implementiert sein. Dabei können beliebige Prozessoren, wie Digitale Signalprozessoren (DSPs) zum Einsatz kommen. Ausführungsbeispiele sind dabei nicht auf einen bestimmten Typ von Prozessor eingeschränkt. Es sind beliebige Prozessoren oder auch mehrere Prozessoren zur Implementierung des Kontrollmoduls 14 denkbar.

Ausführungsbeispiele schaffen beispielsweise ein System und Methode zur Priorisierung von Datenverbindungen in Abhängigkeit von der Kraftstoffreserve.

Der Bedarf an mobilen Daten im Fahrzeug wird auch in Zukunft weiter wachsen. Allerdings haben mobile Datenverbindungen über Mobilfunknetze den Nachteil, dass sie im Vergleich zu anderen Datendiensten (z.B. die heimische Internetverbindung, die üblicherweise "flat" (Nutzungsunabhängig) abgerechnet wird) relativ teuer sind. Trotzdem ist der Rückgriff auf Mobilfunk-gestützte Datendienste im automobilen Umfeld nicht immer zu vermeiden.

Zumindest manche Ausführungsbeispiele beschreiben ein System und Verfahren, das den Rückgriff auf einen Mobilfunk-gestützten Datendienst Kraftstoffreserve-abhängig verzögert und so die Wahrscheinlichkeit erhöht, günstigere Datenverbindungen nutzen zu können.

Zumindest manche Systeme nutzen einen Rückgriff auf andere Datendienste, üblicherweise WLAN zur Vermeidung von teuren Mobilfunk-Datenverbindungen. Häufig ist im Vorfeld nicht immer bekannt, wann eine günstige WLAN-Verbindung zur Verfügung stehen wird. Zumindest manche Ausführungsbeispiele basierend auf einem Rückgriff auf WLAN. Alternativ kann in manchen Systemen die Nutzung einer teuren Datenverbindung - in der Hoffnung auf eine zwischenzeitliche Verfügbarkeit einer günstigeren Datenverbindung - so lange verzögert werden, bis die Nutzung der teuren Datenverbindung unvermeidbar wird. Bei Verzögerung des Nutzens einer teuren Datenverbindung ist häufig nicht vorhersehbar, ob und wann eine günstigere Datenverbindung zur Verfügung steht. Sollte der Fall nie eintreffen, wurde in manchen Fällen unnötig Zeit verschwendet. Alternativ kann die Datenübertragung verzögert werden auf einen Zeitpunkt, zu dem der Mobilfunkanbieter günstigere Konditionen zur Datennutzung anbietet, z.B. nachts. Allerdings ist häufig nicht gesagt, dass Mobilfunkanbieter tatsächlich in jedem Fall nachts günstigere Tarife anbieten. Außerdem könnte selbst auf die günstigeren Kosten noch verzichtet werden, wenn sichergestellt ist, dass in absehbarer Zeit eine kostenlose Datenverbindung mit hoher Wahrscheinlichkeit zur Verfügung stehen wird.

In zumindest manchen Ausführungsbeispielen kann an einer großen Zahl von Tankstellen in Zukunft auch ein durch das Fahrzeug nutzbares WLAN-Netzwerk verfügbar sein.

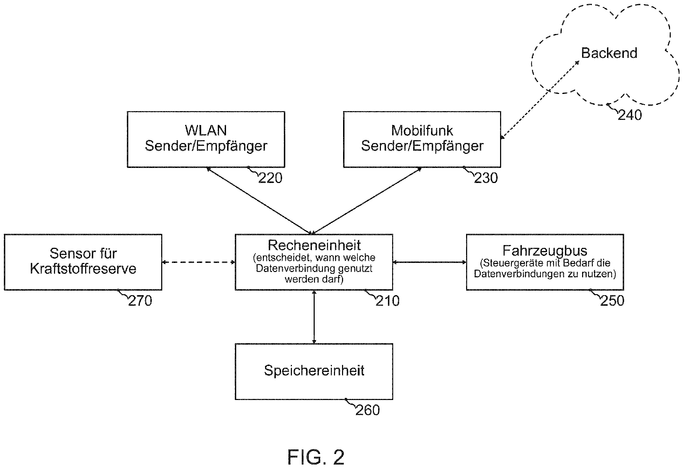

Fig. 2 zeigt ein Blockdiagramm einer Vorrichtung mit einer Datenkommunikationseinrichtung 220, die ein WLAN Sende- und Empfangsmodul umfasst (WLAN Sender/Empfänger 220) und einer Datenkommunikationseinrichtung 230, die eine Sende- und Empfangseinrichtung für Mobilfunk (2G, 3G, LTE,...) umfasst (Mobilfunk Sender/Empfänger 230). Zumindest der Mobilfunk Sender/Empfänger 230 kann ausgebildet sein, um mit einem Backend 240 (etwa einem Server oder einem Rechenzentrum eines Fahrzeugherstellers) zu kommunizieren. Beispielsweise kann das Sende-Empfänger-Modul 12 aus Fig. 1 die Datenkommunikationseinrichtungen 220; 230) umfassen oder implementieren. Die Vorrichtung kann ferner einen Sensor 270 für den Füllstand des Kraftstoffs umfassen und eine Rechen- und Speichereinheit (210; 260, etwa das Kontrollmodul 14), die mit beiden Systemen verbunden ist. Über einen Fahrzeugbus 250 können weitere Steuergerät mit einem Bedarf, die Datenverbindungen zu nutzen mit der Recheneinheit 210 verbunden werden.

Wenn (etwa sobald) sich der Füllstand des Kraftstoffs positiv ändert (=das Fahrzeug getankt wird), kann die Recheneinheit ausgebildet sein, um zu prüfen, ob gleichzeitig oder im kurzen zeitlichen Abstand eine WLAN-Verbindung besteht. Ist dies der Fall, kann ein "Wahrscheinlichkeitsindex" (für das Bestehen der WLAN-Verbindung) in der Speichereinheit um 10 erhöht werden, etwa solange er 100 nicht erreicht hat. Liegt während eines Tankvorgangs keine WLAN-Verbindung an, so kann der "Wahrscheinlichkeitsindex" in der Speichereinheit um 10 reduziert werden, solange er nicht 0 erreicht hat. Nach mindestens 10 Tankvorgängen kann eine Statistik darüber vorliegen, in wieviel % der Fälle bei einem Tankvorgang in der Vergangenheit eine WLAN-Datenverbindung verfügbar war. Beispielsweise kann der Zeitpunkt der letzten 10 Tankvorgänge in der Speichereinheit abgelegt werden, um die durchschnittliche Zeit zwischen zwei Tankvorgängen zu protokollieren.

Beispielsweis kann die Anforderung eines Up- oder Downloads von Daten (einer Datenübertragung von dem Fahrzeug zu einem Server oder einer Datenübertragung von dem Server zu dem Fahrzeug) kann beispielsweise entweder aus dem Fahrzeug selber erfolgen oder kann von einem Backend über die Mobilfunkverbindung getriggert werden.

Liegt nun im Fahrzeug eine Anforderung für den Up- oder Download einer größeren Datenmenge vor, hat die Recheneinheit (etwa das Kontrollmodul 14 aus Fig. 1) die Möglichkeit (kann ausgebildet sein) in Abhängigkeit des Kraftstofffüllstands, der durchschnittlichen Zeit zwischen zwei Tankvorgängen (und damit der erwarteten Zeit bis zum nächsten Tankvorgang) und der Wahrscheinlichkeit, dass während des Tankvorgangs eine WLAN-Datenverbindung verfügbar ist, mit hoher Genauigkeit vorherzusehen, wie hoch die Wahrscheinlichkeit ist in definierter Zeit wieder eine WLAN-Datenverbindung nutzen zu können. Dieses Wissen kann bei der Planung von Up- und Downloadaktivitäten helfen und kann in manchen Fällen helfen, kostenintensive Mobilfunk-Datenverbindungen zu vermeiden.

"Kraftstoffreserve" (oder Energievorrat) kann sich beispielsweise nicht allein auf klassische (fossile) Brennstoffe wie Benzin, Diesel, Erdgas, Autogas (LPG) oder Wasserstoff beziehen, sondern kann auch auf den Ladezustand der Traktionsbatterie bezogen sein. Die Berechnungsformel für die Wahrscheinlichkeit, dass eine WLAN-Datenverbindung während des Tankens verfügbar ist, ist hier beispielhaft gewählt und kann sowohl beliebig komplex als auch grob vereinfacht werden. Ebenso ist die Berechnungsformel für die Zeit, bis der nächste Tankvorgang nötig sein wird, hier nur beispielhaft erfolgt und kann - gegebenenfalls unter Zuhilfenahme weiterer Sensordaten - verfeinert werden. Beispielsweise können auch andere Zeitpunkte zu denen das Fahrzeug einen bestimmten Punkt anfahren wird, an dem WLAN mit hoher Wahrscheinlichkeit verfügbar sein wird, in Betracht gezogen werden. Beispielhaft hierfür wäre ein anstehendes Wartungsintervall oder ein detektierter Defekt, die mit hoher Wahrscheinlichkeit bald einen Besuch in einer Werkstatt nötig machen werden.

Dabei kann die Versorgung mit Kraftstoff (gleich welcher Art) auch in Zukunft ein - in relativ stabilen Intervallen - nötiger Vorgang im Fahrzeug-Alltag bleiben und kann beispielsweise genutzt werden, um die Datenübertragung (zeitgleich) durchzuführen. Gleichzeitig sind viele Menschen Tankstellen- oder Markentreu, so dass davon ausgegangen werden kann, dass wenn beim Tankvorgang x ein WLAN-Netzwerk zur Verfügung steht, die Wahrscheinlichkeit hoch ist, dass auch beim Tankvorgang x+1 ein WLAN Netzwerk zur Verfügung stehen wird.

Zumindest manche Ausführungsbeispiele ermöglichen eine hohe Vorhersehbarkeit und damit gute Planbarkeit von anstehenden Up- oder Downloadaktivitäten im Fahrzeugumfeld. Zumindest manche Ausführungsbeispiele ermöglichen kostengünstigere Datenverbindung durch Planung auf WLAN-Verfügbarkeit anstelle von Ausweichen auf kostengünstigere Mobilfunk-Zeiten.

Mehr Details und Aspekte des Systems, der Vorrichtung und des Verfahrens werden in Verbindung mit dem Konzept oder Beispielen genannt, die vorher (z.B. Fig. 1 und 1a) beschrieben wurden. Das System, die Vorrichtung und/oder das Verfahren kann ein oder mehrere zusätzliche optionale Merkmale umfassen, die ein oder mehreren Aspekten des vorgeschlagenen Konzepts oder der beschriebenen Beispiele entsprechen, wie sie vorher oder nachher beschrieben wurden.

Ein weiteres Ausführungsbeispiel ist ein Computerprogramm zur Durchführung zumindest eines der oben beschriebenen Verfahren, wenn das Computerprogramm auf einem Computer, einem Prozessor oder einer programmierbaren Hardwarekomponente abläuft. Ein weiteres Ausführungsbeispiele ist auch ein digitales Speichermedium, das maschinen- oder computerlesbar ist, und das elektronisch lesbare Steuersignale aufweist, die mit einer programmierbaren Hardwarekomponente so zusammenwirken können, dass eines der oben beschriebenen Verfahren ausgeführt wird.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Bezugszeichenliste

- 10: Vorrichtung
- 12: Sende-Empfänger-Modul
- 14: Kontrollmodul
- 100: Mobilgerät
- 110: Bestimmen ob Zeitspanne unterhalb eines Zeit-Schwellenwerts liegt
- 120: Nutzen eines ersten Mobilkommunikationssystems
- 130: Nutzen eines zweiten Mobilkommunikationssystems
- 210: Recheneinheit
- 220: WLAN Sender/Empfänger
- 230: Mobilfunk Sender/Empfänger
- 240: Backend
- 250: Fahrzeugbus
- 260: Speichereinheit
- 270: Sensor für Kraftstoffreserve

## Patentansprüche

1. Vorrichtung (10) für ein Mobilgerät (100), die Vorrichtung umfassend
ein Sende-Empfänger-Modul (12), ausgebildet zur Kommunikation in einem ersten Mobilkommunikationssystem und in einem zweiten Mobilkommunikationssystem; und ein Kontrollmodul (14), ausgebildet zum:
Bestimmen, ob eine Zeitspanne bis zu einem voraussichtlichen nächsten Zeitpunkt zum Nachfüllen eines Energievorrats des Mobilgeräts (100) oberhalb eines Zeit-Schwellenwerts liegt,
Nutzen des ersten Mobilkommunikationssystems für eine Datenübertragung, falls die Zeitspanne oberhalb des Zeit-Schwellenwerts liegt,
Verzögern der Datenübertragung bis zu einem nächsten Nachfüllen des Energievorrats, bis zu einer nächsten Verfügbarkeit einer Verbindung mit dem zweiten Mobilkommunikationssystem, oder bis zu einem Zeitpunkt, der durch den Zeit-Schwellenwert definiert ist, falls die Zeitspanne unterhalb des Zeit-Schwellenwerts liegt, und
Nutzen des zweiten Mobilkommunikationssystems für die Datenübertragung, falls bei oder vor dem nächsten Zeitpunkt zum Nachfüllen des Energievorrats des Mobilgeräts (100) eine Verbindung mit dem zweiten Mobilkommunikationssystem zur Verfügung steht.

2. Die Vorrichtung (10) gemäß Anspruch 1, wobei das Kontrollmodul (14) ferner ausgebildet ist zum Bestimmen, ob eine Wahrscheinlichkeit, dass sich das Mobilgerät (100) zum voraussichtlichen nächsten Zeitpunkt zum Nachfüllen des Energievorrats in einem Abdeckungsbereich des zweiten Mobilkommunikationssystems befindet, kleiner ist als ein Wahrscheinlichkeits-Schwellenwert, und wobei das Kontrollmodul ferner ausgebildet ist, das erste Mobilkommunikationssystem für die Datenübertragung zu nutzen, falls die Wahrscheinlichkeit kleiner ist als der Wahrscheinlichkeits-Schwellenwert.

3. Die Vorrichtung (10) gemäß einem der vorhergehenden Ansprüche, wobei das Kontrollmodul (14) ausgebildet ist, um eine Position des Mobilgeräts (100) zu bestimmen, wobei das Kontrollmodul (14) ausgebildet ist, basierend auf der Position des Mobilgeräts (100) zu bestimmen, ob die Zeitspanne bis zu einem voraussichtlichen nächsten Zeitpunkt zum Nachfüllen des Energievorrats des Mobilgeräts (100) oberhalb des Zeit-Schwellenwerts liegt,
und/oder wobei das Kontrollmodul (14) ausgebildet ist, um basierend auf einer weiteren Zeitspanne seit einem letzten Zeitpunkt zum Nachfüllen des Energievorrates des Mobilgeräts zu bestimmen, ob die Zeitspanne bis zu einem voraussichtlichen nächsten Zeitpunkt zum Nachfüllen des Energievorrats des Mobilgeräts (100) oberhalb des Zeit-Schwellenwerts liegt,
und/oder wobei das Kontrollmodul (14) ausgebildet ist, um basierend auf einem Energieverbrauch des Mobilgeräts (100) zu bestimmen, ob die Zeitspanne bis zu einem voraussichtlichen nächsten Zeitpunkt zum Nachfüllen des Energievorrats des Mobilgeräts (100) oberhalb des Zeit-Schwellenwerts liegt.

4. Die Vorrichtung gemäß einem der vorhergehenden Ansprüche, wobei das Nachfüllen des Energievorrats des Mobilgeräts (100) einem Nachfüllen des Energievorrats mit elektrischer Energie, mit einem Flüssigkraftstoff, mit Benzin, mit Diesel, mit Erdgas, mit Autogas oder mit Wasserstoff entspricht.

5. Die Vorrichtung gemäß einem der vorhergehenden Ansprüche, wobei das Mobilgerät (100) einem Fahrzeug entspricht,
oder wobei das Mobilgerät (100) einem Mobiltelefon, einem programmierbaren Mobiltelefon, einer programmierbaren Uhr oder einem Tablet-Computer entspricht.

6. Die Vorrichtung gemäß Anspruch 5, wobei das Mobilgerät (100) einem Fahrzeug entspricht, wobei das Kontrollmodul (14) ferner ausgebildet ist, zu bestimmen, ob eine weitere Zeitspanne bis zu einem voraussichtlichen nächsten Fahrzeug-Serviceleistung am Fahrzeug oberhalb des Zeit-Schwellenwerts liegt, und wobei das Kontrollmodul (14) ausgebildet ist, um das erste Mobilkommunikationssystem für die Datenübertragung zu nutzen, falls die Zeitspanne und die weitere Zeitspanne oberhalb des Zeit-Schwellenwerts liegen.

7. Die Vorrichtung gemäß einem der vorhergehenden Ansprüche, wobei das erste Mobilkommunikationssystem einem zellulären Mobilfunksystem entspricht und wobei das zweite Mobilkommunikationssystem einem drahtlosen lokalen Netzwerk entspricht, und/oder wobei das erste Mobilkommunikationssystem einem Mobilkommunikationssystem mit einer ersten höheren Reichweite entspricht und wobei das zweite Mobilkommunikationssystem einem Mobilkommunikationssystem mit einer zweiten niedrigeren Reichweite entspricht.

8. Die Vorrichtung gemäß einem der vorhergehenden Ansprüche, wobei die Datenübertragung einer Übertragung von Daten mit mehr als 50 Megabyte Datenvolumen entspricht,
und/oder wobei die Datenübertragung einer Übertragung von Kartendaten, von Programm-Aktualisierungen von Computerprogrammen des Mobilgeräts (100), von Aktualisierungen eines Betriebssystems des Mobilgeräts (100), von Schwarmdaten, und/oder von Mediendaten entspricht.

9. Verfahren für ein Mobilgerät (100), das Verfahren umfassend
Bestimmen (110), ob eine Zeitspanne bis zu einem voraussichtlichen nächsten Zeitpunkt zum Nachfüllen eines Energievorrats des Mobilgeräts (100) oberhalb eines Zeit-Schwellenwerts liegt;
Nutzen (120) eines ersten Mobilkommunikationssystems für die Datenübertragung, falls die Zeitspanne oberhalb des Zeit-Schwellenwerts liegt;
Verzögern der Datenübertragung bis zu einem nächsten Nachfüllen des Energievorrats, bis zu einer nächsten Verfügbarkeit einer Verbindung mit dem zweiten Mobilkommunikationssystem, oder bis zu einem Zeitpunkt, der durch den Zeit-Schwellenwert definiert ist, falls die Zeitspanne unterhalb des Zeit-Schwellenwerts liegt; und
Nutzen (130) eines zweiten Mobilkommunikationssystems für die Datenübertragung, falls bei oder vor dem nächsten Zeitpunkt zum Nachfüllen des Energievorrats des Mobilgeräts (100) eine Verbindung mit dem zweiten Mobilkommunikationssystem zur Verfügung steht.

10. Programm mit einem Programmcode zum Durchführen des Verfahrens gemäß Anspruch 9, wenn der Programmcode auf einem Computer, einem Prozessor, einem Kontrollmodul oder einer programmierbaren Hardwarekomponente ausgeführt wird.

## Claims

1. Apparatus (10) for a mobile device (100), the apparatus comprising
a transceiver module (12), designed for communication in a first mobile communication system and in a second mobile communication system; and
a monitoring module (14), designed for:
determining whether a period of time until a probable next time for refilling an energy supply of the mobile device (100) is above a time threshold value,
using the first mobile communication system for a data transmission if the period of time is above the time threshold value,
delaying the data transmission until a next refilling of the energy supply, until a next availability of a connection to the second mobile communication system or until a time defined by the time threshold value if the period of time is below the time threshold value, and
using the second mobile communication system for the data transmission if a connection to the second mobile communication system is available at or before the next time for refilling the energy supply of the mobile device (100).

2. Apparatus (10) according to Claim 1, wherein the monitoring module (14) is further designed to determine whether a probability of the mobile device (100) being in a coverage area of the second mobile communication system at the probable next time for refilling the energy supply is lower than a probability threshold value, and wherein the monitoring module is further designed to use the first mobile communication system for the data transmission if the probability is lower than the probability threshold value.

3. Apparatus (10) according to either of the preceding claims, wherein the monitoring module (14) is designed to determine a position of the mobile device (100), wherein the monitoring module (14) is designed to take the position of the mobile device (100) as a basis for determining whether the period of time until a probable next time for refilling the energy supply of the mobile device (100) is above the time threshold value,
and/or wherein the monitoring module (14) is designed to take a further period of time since the last time for refilling the energy supply of the mobile device as a basis for determining whether the period of time until a probable next time for refilling the energy supply of the mobile device (100) is above the time threshold value,
and/or wherein the monitoring module (14) is designed to take an energy consumption of the mobile device (100) as a basis for determining whether the period of time until a probable next time for refilling the energy supply of the mobile device (100) is above the time threshold value.

4. Apparatus according to one of the preceding claims, wherein the refilling of the energy supply of the mobile device (100) corresponds to a refilling of the energy supply with electric power, with a liquid fuel, with petrol, with diesel, with natural gas, with LPG or with hydrogen.

5. Apparatus according to one of the preceding claims, wherein the mobile device (100) corresponds to a vehicle,
or wherein the mobile device (100) corresponds to a mobile phone, a programmable mobile phone, a programmable clock or a tablet computer.

6. Apparatus according to Claim 5, wherein the mobile device (100) corresponds to a vehicle, wherein the monitoring module (14) is further designed to determine whether a further period of time until a probable next vehicle service on the vehicle is above the time threshold value, and wherein the monitoring module (14) is designed to use the first mobile communication system for the data transmission if the period of time and the further period of time are above the time threshold value.

7. Apparatus according to one of the preceding claims, wherein the first mobile communication system corresponds to a cellular mobile radio system and wherein the second mobile communication system corresponds to a wireless local area network, and/or wherein the first mobile communication system corresponds to a mobile communication system having a first, longer range and wherein the second mobile communication system corresponds to a mobile communication system having a second, shorter range.

8. Apparatus according to one of the preceding claims, wherein the data transmission corresponds to a transmission of data having a data volume of more than 50 megabytes,
and/or wherein the data transmission corresponds to a transmission of map data, of program updates for computer programs of the mobile device (100), of updates for an operating system of the mobile device (100), of swarm data and/or of media data.

9. Method for a mobile device (100), the method comprising
determining (110) whether a period of time until a probable next time for refilling an energy supply of the mobile device (100) is above a time threshold value;
using (120) a first mobile communication system for the data transmission if the period of time is above the time threshold value;
delaying the data transmission until a next refilling of the energy supply, until a next availability of a connection to the second mobile communication system or until a time defined by the time threshold value if the period of time is below the time threshold value; and using (130) a second mobile communication system for the data transmission if a connection to the second mobile communication system is available at or before the next time for refilling the energy supply of the mobile device (100).

10. Program having a program code for performing the method according to Claim 9 when the program code is executed on a computer, a processor, a monitoring module or a programmable hardware component.

## Revendications

1. Dispositif (10) destiné à un appareil mobile (100), le dispositif comprenant
un module émetteur-récepteur (12) conçu pour communiquer dans un premier système de communication mobile et dans un second système de communication mobile ; et
un module de commande (14) conçu pour :
déterminer si une période de temps s'écoulant jusqu'à un instant suivant prévu pour le rechargement d'une réserve d'énergie de l'appareil mobile (100) est supérieur à un seuil de temps,
utiliser le premier système de communication mobile pour une transmission de données si l'intervalle de temps est supérieur au seuil de temps
retarder la transmission de données jusqu'à un rechargement suivant de la réserve d'énergie, jusqu'à une disponibilité suivante d'une liaison avec le second système de communication mobile, ou jusqu'à un instant défini par le seuil de temps si la période de temps est inférieure au seuil de temps ; et
utiliser le second système de communication mobile pour la transmission de données si une liaison avec le second système de communication mobile est disponible lors de l'instant de rechargement suivant ou avant, de réserve d'énergie de l'appareil mobile (100).

2. Dispositif (10) selon la revendication 1, dans lequel le module de commande (14) est en outre conçu pour déterminer si une probabilité que l'appareil mobile (100) se trouve dans une zone de couverture du second système de communication mobile à l'instant suivant prévue pour le rechargement de la réserve d'énergie est inférieure à un seuil de probabilité, et
dans lequel le module de commande est en outre conçu pour utiliser le premier système de communication mobile pour la transmission de données si la probabilité est inférieure au seuil de probabilité.

3. Dispositif (10) selon l'une des revendications précédentes, dans lequel le module de commande (14) est conçu pour déterminer une position du dispositif mobile (100),
dans lequel le module de commande (14) est conçu pour déterminer, sur la base de la position de l'appareil mobile (100), si la période de temps jusqu'à l'instant suivant prévu pour le rechargement de la réserve d'énergie de l'appareil mobile (100) est supérieure au seuil de temps, et/ou
dans lequel le module de commande (14) est conçu pour déterminer, sur la base d'une autre période de temps écoulée depuis un dernier instant de rechargement de la réserve d'énergie de l'appareil mobile, si la période de temps s'écoulant jusqu'à un instant suivant prévu de rechargement de la réserve d'énergie de l'appareil mobile (100) est supérieure au seuil de temps, et/ou dans lequel le module de commande (14) est conçu pour déterminer, sur la base d'une consommation d'énergie de l'appareil mobile (100), si la période de temps s'écoulant jusqu'à un instant suivant prévu pour le rechargement de la réserve d'énergie de l'appareil mobile (100) est supérieure au seuil de temps.

4. Dispositif selon l'une des revendications précédentes, dans lequel le rechargement de la réserve d'énergie de l'appareil mobile (100) correspond au rechargement de la réserve d'énergie avec de l'énergie électrique, avec un combustible liquide, avec de l'essence, avec du gazole, avec du gaz naturel, avec du GPL ou avec de l'hydrogène.

5. Dispositif selon l'une des revendications précédentes, dans lequel l'appareil mobile (100) correspond à un véhicule, ou
dans lequel l'appareil mobile (100) correspond à un téléphone mobile, un téléphone mobile programmable, une horloge programmable ou une tablette informatique.

6. Dispositif selon la revendication 5, dans lequel l'appareil mobile (100) correspond à un véhicule,
dans lequel le module de commande (14) est en outre conçu pour déterminer si une autre période de temps s'écoulant jusqu'à la mise en service suivante prévue du véhicule est supérieure au seuil de temps, et
dans lequel le module de commande (14) est conçu pour utiliser le premier système de communication mobile pour la transmission de données si la période de temps et l'autre période de temps sont supérieures au seuil de temps.

7. Dispositif selon l'une des revendications précédentes, dans lequel le premier système de communication mobile correspond à un système de radio mobile cellulaire ; et
dans lequel le second système de communication mobile correspond à un réseau local sans fil, et/ou dans lequel le premier système de communication mobile correspond à un système de communication mobile ayant une première portée plus élevée, et
dans lequel le second système de communication mobile correspond à un système de communication mobile ayant une seconde portée inférieure.

8. Dispositif selon l'une des revendications précédentes, dans lequel la transmission de données correspond à une transmission de données présentant un volume de données de plus de 50 mégaoctets ; et/ou dans lequel la transmission de données correspond à une transmission de données cartographiques, de mises à jour de programmes informatiques de l'appareil mobile (100), de mises à jour d'un système d'exploitation de l'appareil mobile (100), de données de groupe et/ou de données multimédia.

9. Procédé destiné à un appareil mobile (100), le procédé consistant à déterminer (110) si une période de temps s'écoulant jusqu'à un instant suivant prévu pour le rechargement d'une réserve d'énergie de l'appareil mobile (100) est supérieure à un seuil de temps ;
utiliser (120) un premier système de communication mobile pour la transmission de données si la période de temps est supérieure au seuil de temps ;
retarder la transmission de données jusqu'à un rechargement suivant de la réserve d'énergie, jusqu'à une disponibilité suivante d'une liaison avec le second système de communication mobile, ou jusqu'à un instant défini par le seuil de temps si la période de temps est inférieure au seuil de temps ;
et
utiliser (130) un second système de communication mobile pour la transmission de données si une liaison avec le second système de communication mobile est disponible à l'instant de rechargement suivant de la réserve d'énergie de l'appareil mobile (100), ou avant.

10. Programme comprenant un code de programme servant à mettre en œuvre le procédé selon la revendication 9, lorsque le code de programme est exécuté sur un ordinateur, un processeur, un module de commande ou un composant matériel programmable.
